# EUROPÄISCHE PATENTANMELDUNG

(11) **EP 2 273 651 A1**
(43) Veröffentlichungstag der Anmeldung: **12.01.2011**
(21) Anmeldenummer: 09008832.9
(22) Anmeldetag: 07.07.2009
(51) Int. Cl.: H02K 1/06

(54) **Elektrische Maschine**

(71) Anmelder: Dietz-motoren GmbH & Co. KG, 73265 Dettingen/Teck (DE)
(72) Erfinder: Barth, Andreas, 74538 Rosengarten (DE); Strauß, Bernd, 72800 Eningen (DE)
(74) Vertreter: Ruckh, Rainer Gerhard

(57) **Zusammenfassung**

Die Erfindung betrifft eine elektrische Maschine (1) die als Motor oder Generator betreibbar ist. Die elektrische Maschine (1) umfasst einen Rotor (5) mit einer Rotorscheibe (7), die an einer um eine Drehachse drehbare Rotorwelle (6) befestigt ist, sowie einen Stator (4). Der Rotor (5) und Stator (4) weisen einander gegenüberliegende Stirnseiten auf. Die Stirnseiten sind jeweils in einem Neigungswinkel bezüglich der Drehachse der Rotorwelle (6) schräg gestellt. Ein zur Drehachse symmetrisches kegelförmiges Luftspaltfeld wird zwischen Rotor (5) und Stator (4) erhalten.

## Beschreibung

Die Erfindung betrifft eine elektrische Maschine gemäß dem Oberbegriff des Anspruchs 1.

Eine derartige elektrische Maschine ist aus der EP 1 796 249 A1 bekannt.

Die dort beschriebene elektrische Maschine kann als Motor oder Generator betrieben werden. Sie besteht aus einem Gehäuse, einer in diesem gelagerten und aus diesem herausgeführten Rotorwelle und einem im Gehäuse integrierten Rotor und Stator. Der Rotor umfasst eine drehfest mit der Rotorwelle verbundene Rotorscheibe. Auf deren dem Stator zugewandten Stirnseite sind Permanentmagnetsegmente angeordnet, welche in Umfangsrichtung aufeinander folgend jeweils eine entgegen gesetzte Polarität aufweisen. Der Stator weist einen ein Joch bildenden Blechpaketring auf, welcher Nuten zur Aufnahme von Spulenwicklungen aufweist. Zwischen Rotor und Stator ist bezüglich der Drehachse der Rotorwelle ein axiales Luftspaltfeld generiert. Innerhalb des Jochs erfolgt eine Magnetflussumkehr.

Ein Vorteil dieser elektrischen Maschine besteht darin, dass diese als Rotor nur eine Rotorscheibe aufweist, auf deren dem Stator zugewandten Stirnseite die Permanentmagnetsegmente angeordnet sind. Dies führt zu einer erheblichen Reduzierung der Teile der elektrischen Maschine und damit zu einer kleinen Bauform sowie zu einer beträchtlichen Reduktion der Herstellkosten der elektrischen Maschine.

Ein Nachteil dieser elektrischen Maschine besteht jedoch darin, dass durch deren axiale Bauweise mit dem axialen Luftspaltfeld infolge der Anziehungskräfte zwischen Rotor und Stator massive axiale Kräfte auf die Motorlagerung wirken, wodurch erhebliche Reibungsverluste entstehen. Diese Verluste können, insbesondere bei schnell drehenden elektrischen Maschinen, zu einer empfindlichen Reduzierung des Gesamtwirkungsgrads und zu einer massiven Herabsetzung der Lebensdauer der Motorlagerung führen.

Der Erfindung liegt die Aufgabe zugrunde, eine elektrische Maschine bereitzustellen, die einerseits die Vorteile einer Axialflussmaschine aufweist und bei welcher andererseits Lagerreibungsverluste weitgehend vermieden werden.

Zur Lösung dieser Aufgabe sind die Merkmale des Anspruchs 1 vorgesehen. Vorteilhafte Ausfiihrungsformen und zweckmäßige Weiterbildungen der Erfindung sind in den Unteransprüchen beschrieben.

Die erfindungsgemäße elektrische Maschine ist als Motor oder Generator betreibbar und umfasst einen Rotor mit einer Rotorscheibe, die an einer um eine Drehachse drehbare Rotorwelle befestigt ist, sowie einen Stator. Der Rotor und Stator weisen einander gegenüberliegende Stirnseiten auf. Die Stirnseiten sind jeweils in einem Neigungswinkel bezüglich der Drehachse der Rotorwelle schräg gestellt. Ein zur Drehachse symmetrisches kegelförmiges Luftspaltfeld wird zwischen Rotor und Stator erhalten.

Durch die Schrägstellung der Stirnseiten des Rotors und des Stators bezüglich der Drehachse der Rotorwelle und das dadurch erhaltene kegelförmige Luftspaltfeld werden auch bei der erfindungsgemäßen elektrischen Maschine die Vorteile einer Axialflussmaschine erzielt, nämlich eine kompakte Bauform und dadurch bedingt ein kostengünstiger Aufbau.

Ein weiterer wesentlicher Vorteil dieser Anordnung besteht darin, dass die Anziehungskräfte zwischen Rotor und Stator nicht nur in axialer, sondern auch in radialer Richtung verlaufen. Durch eine geeignete Dimensionierung des Neigungswinkels der Stirnseiten zur Drehachse der Rotorwelle können die auf die Motorlagerung wirkenden Kräfte auf ein unkritisches Maß reduziert werden, so dass der Gesamtwirkungsgrad der elektrischen Maschine durch diese Kräfte nicht nennenswert beeinträchtigt wird und eine hohe Lebensdauer der Motorlagerung erhalten wird.

Vorteilhaft sind die Stirnseiten des Rotors und Stators im selben Neigungswinkel zur Drehachse geneigt.

Damit sind die Stirnflächen des Rotors und Stators parallel in Abstand zueinander orientiert, wodurch ein homogenes Luftspaltfeld erhalten wird.

Der Neigungswinkel α liegt im Bereich 0 < α < 90° oder 90 < α < 180°.

Dies bedeutet, dass die Stirnseiten des Rotors und Stators sowohl zum einen als auch zum anderen axialen Ende des Motors hin schräg zulaufen können.

Gemäß einer besonders vorteilhaften Ausfiihrungsform ist der Neigungswinkel α so gewählt, dass in Richtung der Drehachse wirkende Anziehungskräfte zwischen Rotor und Stator erhalten werden, die eine Verspannung von Lagern zur Führung der Rotorwelle bewirken.

In diesem Fall werden die in axialer Richtung wirkenden Kräfte auf die Motorlagerung, die durch die Anziehung zwischen Rotor und Stator bedingt sind, positiv dazu genutzt, die Lager der Motorlagerung vorzuspannen, so dass für diese Vorspannung anders als bei bekannten Systemen keine Federanstellung der Lager durchgeführt werden muss. Durch die Einsparung der Federn ergibt sich ein erheblicher Kostenvorteil.

Gemäß einer ersten vorteilhaften Ausfiihrungsform der Erfindung sind an der Rotorscheibe Permanentmagnetsegmente angeordnet, welche im Umfangsrichtung aufeinander folgend jeweils eine entgegengesetzte Polarität aufweisen.

Dabei sind zweckmäßig die Permanentmagnetsegmente auf der dem Stator zugewandten Stirnseite der Rotorscheibe oder hinter der Stirnseite liegend angeordnet.

Die so ausgebildete elektrische Maschine bildet einen Synchronmotor oder Synchrongenerator, bei welchen das generierte Magnetfeld synchron mit dem Rotor umläuft.

Die erste Ausführungsform kann dahingehend weitergebildet sein, dass auf der Rotorscheibe ein Dämpferkäfig vorgesehen ist. Zur Ausbildung des Dämpferkäfigs sind zwei bezüglich der Drehachse der Rotorwelle konzentrische metallische Ringe vorgesehen, zwischen welchen die Permanentmagnetsegmente angeordnet sind. Die Ringe sind durch in radialer Richtung zwischen den einzelnen Permanentmagnetsegmenten verlaufende metallische Stäbe verbunden.

Dieser Dämpferkäfig sorgt insbesondere bei einem Betrieb der elektrischen Maschine als Motor dafür, dass bei Last- und/oder Drehzahländerungen keine unerwünschten Schwingungen, vorgenannte Polradschwingungen, der Rotorscheibe auftreten.

Gemäß einer zweiten Ausfiihrungsform der Erfindung übernimmt der Dämpferkäfig die Funktion eines Kurzschlusskäfigs einer Asynchronmaschine. Die Rotorscheibe weist keine Permanentmagnetsegmente auf und die elektrische Maschine arbeitet als Asynchronmaschine mit Kurzschlusskäfig.

In einer vorteilhaften Ausfiihrungsform der Erfindung weist der Stator als Joch einen Blechpaketring auf, wobei auf dem Blechpaketring Spulenwicklungen angebracht sind.

Dabei weist der Blechpaketring Nuten zur Aufnahme der Spulenwicklungen auf. Der so ausgebildete Stator ist besonders kostengünstig herstellbar.

Eine wesentliche Voraussetzung dafür, dass eine Rotorscheibe zur Ausbildung des Rotors ausreichend ist, ist eine geeignete Dimensionierung des Jochs des Stators in Form des Blechpaketrings. Dabei sind insbesondere die Höhe des Blechpaketrings sowie die Dimensionierung der Nuten zur Aufnahme der Spulenwicklungen so dimensioniert, dass eine vollständige Umkehr des magnetischen Flusses im Blechpaketring erfolgen kann. Damit ist gewährleistet, dass während des Betriebs der elektrischen Maschine, bei welchem durch die Ströme in den Spulenwicklungen des Stators ein magnetisches Drehfeld erzeugt wird, der Magnetfluss vollständig innerhalb des Jochs geführt wird.

Die elektrische Maschine ist in einem Gehäuse integriert, aus welchem die Rotorwelle herausgeführt ist. Das Gehäuse besteht bevorzugt aus einem Gehäusemantel, der eine hohlzylindrische Form aufweist und dessen stirnseitige Öffnungen mit Lagerschilden als weiteren Gehäusekomponenten abgeschlossen sind.

Der Blechpaketring wird direkt am Gehäusemantel oder unmittelbar an den Lagerschilden befestigt. Durch das kegelförmig verlaufende Luftspaltfeld liegt das Statorjoch für die Umkehr des magnetischen Flusses in der gleichen Durchmesserebene wie die Luftspaltfläche und kann deshalb gegenüber herkömmlichen Longitudendinalmaschinen extrem materialsparend ausgebildet werden.

Die Entwärmung der erfindungsgemäßen elektrischen Maschine erfolgt je nach Betriebsart der Maschine mittels freier Konvektion über das Gehäuse der Maschine, wobei der Gehäusemantel und oder die Lagerschilde mit Kühlrippen zur Oberflächenvergrößerung versehen sein können. Möglich sind auch bekannte Verfahren der Oberflächenkühlung mittels Belüftungseinheit, als Eigenbelüftung oder Fremdbelüftung, sowie Verfahren der Flüssigkeitskühlung über Kühlkanäle, die im Gehäusemantel und/oder den Lagerschilden eingebracht sind. Die thermische Anbindung der Wärmeerzeuger an das Gehäuse kann durch Ausgießen des inneren Hohlraums mit einer gut wärmeleitenden Vergussmasse erheblich verbessert werden. Die Wärmeableitung über die Luftwege an das Gehäuse kann unterstützt werden, wenn zusätzlich ein Lüfterflügel auf der Rotorwelle drehfest angebracht wird. Intensivste Innenkühlung ist gegeben, wenn die Lagerschilde Öffnungen erhalten und der Innenraum durchzugsbelüftet wird. Alle genannten Kühlmöglichkeiten sind miteinander frei kombinierbar.

Eine Erhöhung der Leistung der elektrischen Maschine kann ohne Vergrößerung des Maschinendurchmessers dadurch erfolgen, dass zwei oder mehr in Rotorwellenlängsrichtung im Abstand zueinander angeordnete Aktivmaterialeinheiten, bestehend aus Rotorscheibe und Stator, in Reihe mechanisch hintereinander innerhalb eines Maschinengehäuses geschaltet werden.

Die Erfindung wird im Folgenden anhand der Zeichnungen erläutert. Es zeigen:
- Figur 1:: Erstes Ausführungsbeispiel der erfindungsgemäßen elektrischen Maschine mit einem Rotor und Stator.
- Figur 2:: Querschnitt durch den Rotor der elektrischen Maschine gemäß Figur 1.
- Figur 3:: Zweites Ausführungsbeispiel der erfindungsgemäßen elektri- schen Maschine.
- Figur 4:: Drittes Ausführungsbeispiel der erfindungsgemäßen elektrischen Maschine.

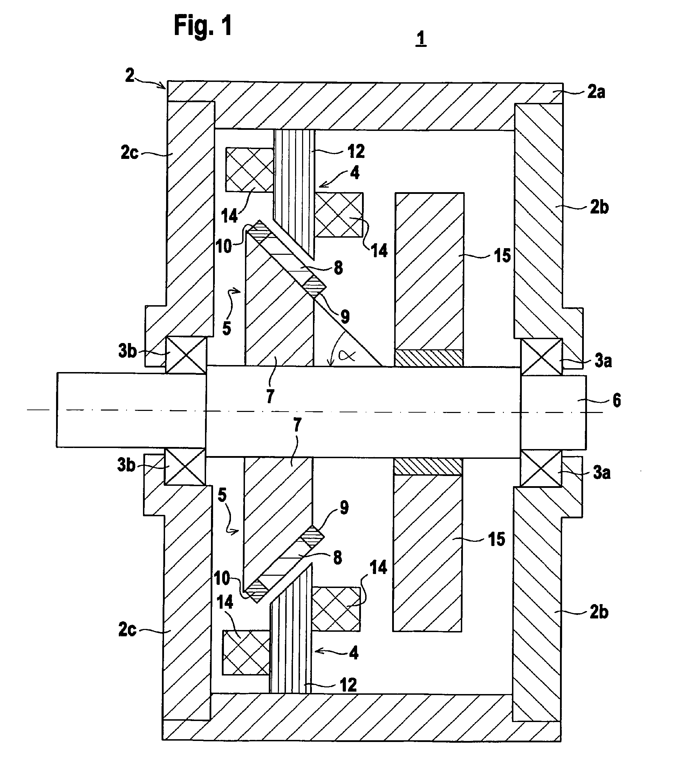

Figur 1 zeigt ein Ausführungsbeispiel einer elektrischen Maschine 1, welche als permanenterregter Motor oder Generator betrieben werden kann. Die Komponenten der elektrischen Maschine sind in einem hohlzylindrischen Gehäuse 2 integriert, welches einen Gehäusemantel 2a sowie zwei das Gehäuse stirnseitig abschließende Lagerschilde 2b, 2c umfasst. An den Lagerschilden 2b, 2c ist jeweils ein Lager 3a, b angeordnet. In den Lagern 3a, b ist als Bestandteil des mit einem Stator 4 zusammenwirkenden Rotors 5 der elektrischen Maschine 1 eine Rotorwelle 6 drehbar gelagert. Die Drehachse der Rotorwelle 6 verläuft in der in axialer Richtung des Gehäuses 2 verlaufenden Symmetrieachse der elektrischen Maschine 1. Wie aus Figur 1 ersichtlich, ist ein Ende der Rotorwelle 6 zum Anschluss an externe Einheiten aus dem Gehäuse 2 herausgeführt. Die Komponenten der elektrischen Maschine 1 sind symmetrisch zur Drehachse.

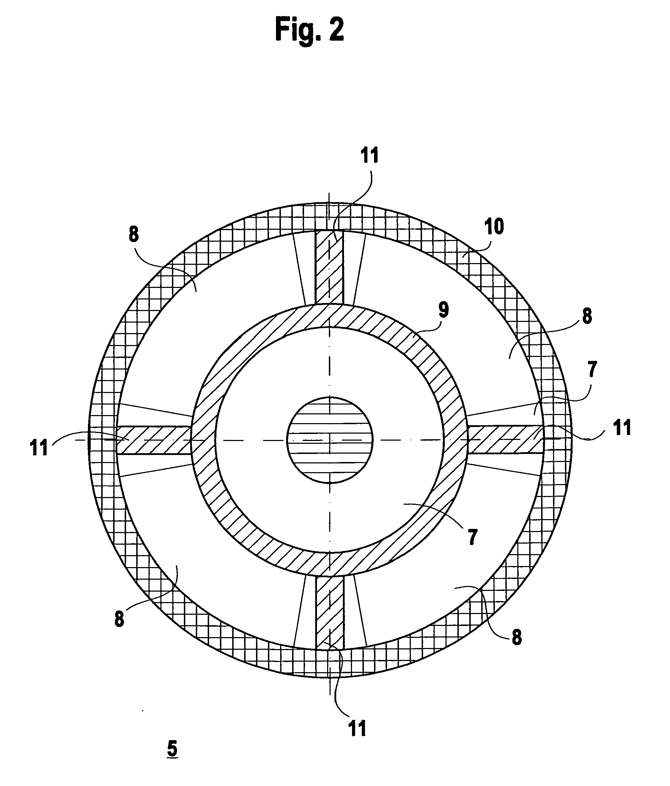

Als weiterer Bestandteil des Rotors 5 ist an der Rotorwelle 6 eine kreisscheibenförmige Rotorscheibe 7 befestigt, die mit der Rotorwelle 6 um deren Drehachse drehbar ist. Der Rotor 5 mit der Rotorscheibe 7 ist in Figur 2 in einer Querschnittsdarstellung dargestellt.

An der dem Stator 4 der elektrischen Maschine 1 zugeordneten Stirnseite der Rotorscheibe 7 sind mehrere konzentrisch zur Drehachse des Rotors 5 in Umfangsrichtung aufeinander folgende Permanentmagnetsegmente 8 aufgebracht. Die Permanentmagnetsegmente 8 bilden eine alternierende Folge von Magnetelementen unterschiedlicher Polarität, das heißt Nord- und Südpole bildende Permanentmagnetsegmente 8 sind abwechselnd hintereinander angeordnet. Wie insbesondere aus Figur 1 ersichtlich, sind die Permanentmagnetsegmente 8 auf der Stirnseite der Rotorscheibe 7 aufgebracht, so dass diese über die Stirnseite der Rotorscheibe 7 hervorstehen. Wie aus Figur 2 ersichtlich, sind im vorliegenden Fall vier identisch ausgebildete Permanentmagnetsegmente 8 auf der Rotorscheibe 7 vorgesehen. Die Rotorscheibe 7 besteht zumindest im Bereich der Permanentmagnetsegmente 8 aus ferromagnetischem Material. Im vorliegenden Fall besteht die gesamte Rotorscheibe 7 aus ferromagnetischem Materal.

Zur Unterdrückung von Schwingungen der Rotorscheibe 7 beim Betrieb der elektrischen Maschine 1, insbesondere bei Last- und Drehzahländerungen, ist an der Rotorscheibe 7 zusätzlich ein Dämpferkäfig vorgesehen. Dieser Dämpferkäfig besteht aus zwei auf der dem Stator 4 zugewandten Stirnseite der Rotorscheibe 7 aufgebrachten Ringen 9, 10, die an die inneren beziehungsweise äußeren Ränder der Permanentmagnetsegmente 8 anschließen. Der Dämpferkäfig wird komplettiert durch in radialer Richtung auf der Rotorscheibe 7 verlaufende Stäbe 11, die die beiden Ringe 9, 10 verbinden und welche in den Zwischenräumen zwischen den Permanentmagnetsegmenten 8 geführt sind. Die Komponenten des Dämpferkäfigs umschließen somit die Permanentmagnetsegmente 8 vollständig. Die Komponenten des Dämpferkäfigs bestehen aus paramagnetischem oder diamagnetischem Werkstoff, insbesondere Aluminium. Treten bedingt durch Last- oder Drehzahländerungen beim Betrieb der elektrischen Maschine 1 Schwingungen in der Rotorscheibe 7 auf, so werden im Dämpferkäfig induzierte Spannungen induziert, welche die Schwingungen dämpfen.

Der Stator 4 der elektrischen Maschine 1 weist als Joch einen kreisringförmigen Blechpaketring 12 auf, der konzentrisch zur Rotorwelle 6 angeordnet ist. Der Blechpaketring 12 besteht aus einzelnen Blechstreifen, die zwischen 0,1 bis 1 mm dick sein können, vorzugsweise aber alle 0,5 mm dick sind, und die axial oder radial aufgeschichtet sein können, wobei die Höhe (Gesamtdicke) des Blechpaketrings 12 sich aus der Anzahl der einzelnen Blechschichten ergibt. In den Blechpaketring 12 sind in radialer Richtung verlaufende nicht dargestellte Nuten eingearbeitet. Die Nuten sind in gleichförmigen Winkelabständen über den Blechpaketring 12 verteilt und münden an dessen Mantelfläche aus, wobei diese zumindest teilweise an der Mantelfläche des Blechpaketrings 12 offen liegen.

Die Nuten des Blechpaketrings 12 dienen zur Aufnahme von Spulenwicklungen 14 als weiteren Komponenten des Stators 4. Die Spulenwicklungen 14 sind durch eine Harzimprägnierung am Blechpaketring 12 fixiert und an diesen angebunden. Der Anschluss der herausgeführten Wicklungsenden erfolgt an eine Leistungselektronik, die in der Lage ist, frequenzvariable Ausgangsspannungen zu erzeugen oder in Abhängigkeit der Rotorlage Spannungsblöcke phasenrichtig weiterzuschalten. Im ersten Fall arbeitet der Motor als permanenterregte Synchronmaschine und im zweiten Fall als elektronisch kommutierte "Gleichstrommaschine" beziehungsweise EC-Motor.

Beim Betrieb der elektrischen Maschine 1 als Generator wird die Rotorwelle 6 angetrieben, wodurch die drehende Rotorscheibe 7 im Stator 4 ein elektrisches Drehfeld erzeugt, welches an den Enden der Spulenwicklungen 14 über die Leistungselektronik zur Stromerzeugung abnehmbar ist.

Wie aus Figur 1 ersichtlich, verlaufen sowohl die Stirnseite des Rotors 5 als auch die Stirnseite des Stators 4, der an der Innenseite des Gehäusemantels 2a befestigt ist, jeweils in einem Neigungswinkel α zur Drehachse der Rotorwelle 6. Der Neigungswinkel beträgt im vorliegenden Fall etwa 45°, das heißt die Stirnseiten fallen zum axialen Ende der elektrischen Maschine 1 mit dem Lagerschild 2d hin ab. Eine entsprechende Anordnung mit zum Lagerschild 2c hin abfallenden Stirnseiten ergibt sich für einen Neigungswinkel von α = 135°. Allgemein liegt der Neigungswinkel α im Bereich 0° < α < 90° oder 90° < α < 180°.

Durch die geneigten gegenüberliegenden Stirnflächen des Rotors 5 und Stators 4 wird kein axiales, sondern ein kegelförmiges Luftspaltfeld zwischen Rotor 5 und Stator 4 erhalten, welches symmetrisch zur Drehachse der Rotorwelle 6 ist. Da die Stirnflächen des Rotors 5 und des Stators 4 denselben Neigungswinkel aufweisen, ist der Abstand zwischen den Stirnseiten des Rotors 5 und Stators 4 konstant, wodurch sich ein gleichförmiges Luftspaltfeld ergibt.

Da der Rotor 5 und der Stator 4 teilweise übereinander geschoben sind, wird bei der erfindungsgemäßen elektrischen Maschine 1 mit einem kegelförmigen Luftspaltfeld eine ähnliche kompakte Bauform wie bei einer elektrischen Maschine 1 mit axialem Luftspaltfeld erhalten.

Weiterhin können durch eine geeignete Vorgabe des Neigungswinkels auf die Lager 3a, 3b wirkende axiale Kräfte gezielt reduziert werden, wodurch einerseits die Lebensdauer der Lager 3a, 3b vergrößert wird und andererseits Lagerreibungsverluste reduziert und damit der Gesamtwirkungsgrad der elektrischen Maschine 1 erhöht wird.

Die auf die Lager 3a, 3b wirkenden axialen Kräfte sind bedingt durch die in axialer Richtung wirkenden Anziehungskräfte zwischen Rotor 5 und Stator 4. Durch die Variation des Neigungswinkels α kann das Verhältnis der Komponenten der Anziehungskraft in axialer und radialer Richtung variiert werden und damit der Absolutbetrag der Anziehungskräfte in axialer Richtung, welche auf die Lager 3a, 3b wirken.

Besonders vorteilhaft ist der Neigungswinkel α so gewählt, dass in Richtung der Drehachse wirkende Anziehungskräfte zwischen Rotor 5 und Stator 4 erhalten werden, die ein Verspannung von Lagern zur Führung der Rotorwelle 6 bewirken.

In diesem Fall werden die in axialer Richtung wirkenden Kräfte vorteilhaft dafür genutzt, die Lager 3a, 3b vorzuspannen. Damit entfallen die üblicherweise für eine Federvorspannung verwendeten Federn.

Zur Gewährleistung einer guten thermischen Anbindung der Wärmeerzeuger der elektrischen Maschine 1 an das Gehäuse 2, insbesondere des Blechpaketrings 12 mit den Spulenwicklungen 14, kann der Gehäuseinnenraum mit einer gut wärmeleitenden Vergussmasse vergossen werden.

Die Entwärmung der elektrischen Maschine 1 kann insbesondere mittels freier Konvektion über das Gehäuse 2 erfolgen. Hierzu ist im vorliegenden Fall an der Rotorwelle 6 ein Lüfterflügel 15 befestigt, der sich mit der Rotorwelle 6 mitdreht. Weiterhin können zur Oberflächenvergrößerung der Innenfläche des Gehäuses 2 an den Innenseiten des Gehäusemantels 2a und der Lagerschilde 2b, 2c nicht dargestellte Kühlrippen vorgesehen sein. Schließlich können die Lagerschilde 2b, 2c nicht dargestellte Öffnungen enthalten, wodurch eine Durchzugsbelüftung des Innenraums des Gehäuses 2 ermöglicht wird. Alternativ oder zusätzlich können der elektrischen Maschine 1 Fremdbelüftungseinheiten zugeordnet sein. Weiterhin können auch im Gehäuse 2 verlaufende Kühlkanäle zwecks Flüssigkeitskühlung vorgesehen sein.

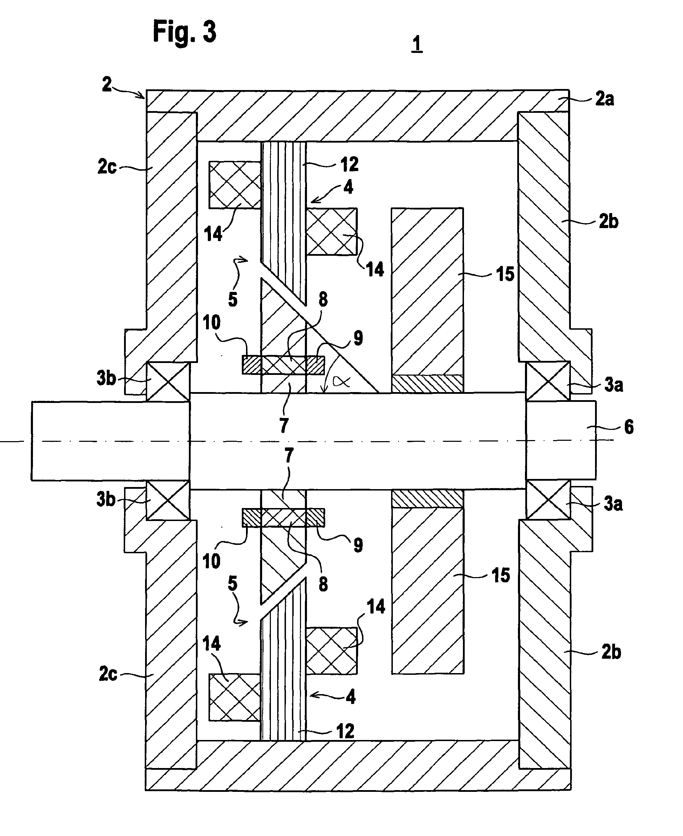

Figur 3 zeigt ein zweites Ausführungsbeispiel der erfindungsgemäßen elektrischen Maschine 1. Die elektrische Maschine 1 gemäß Figur 3 ist weitgehend identisch mit dem Ausführungsbeispiel gemäß Figur 1. Insbesondere verlaufen die Stirnseiten des Rotors 5 und Stators 4 wieder in einem Neigungswinkel α zur Drehachse der Rotorwelle 6. Im Unterschied zum Ausführungsbeispiel gemäß Figur 1 sind bei der elektrischen Maschine 1 gemäß Figur 3 die Permanentmagnetsegmente 8 mit dem Dämpferkäfig nicht an der Stirnseite des Rotors 5 angeordnet, sondern zur Rotorwelle 6 hin nach innen versetzt.

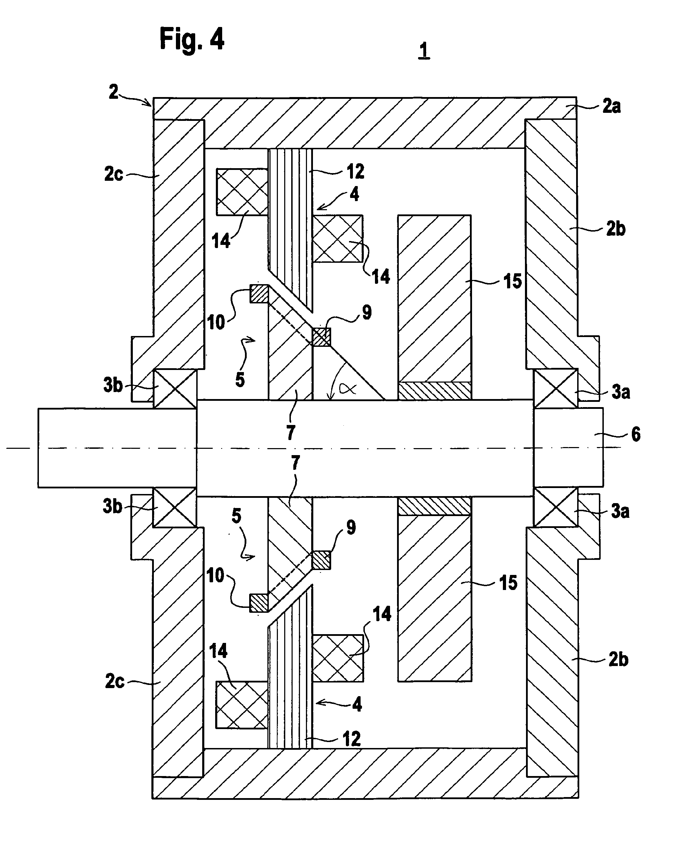

Figur 4 zeigt ein drittes Ausführungsbeispiel der erfindungsgemäßen elektrischen Maschine 1. Auch diese elektrische Maschine 1 entspricht weitgehend der Ausfiihrungsform gemäß Figur 1. Im Unterschied zur Ausfiihrungsform gemäß Figur 1 weist der Rotor 5 der elektrischen Maschine 1 gemäß Figur 1 keine Permanentmagnetsegmente 8, sondern nur einen Dämpferkäfig auf, welcher im Bereich der Stirnseite des Rotors 5 angeordnet ist. Die elektrische Maschine 1 arbeitet nicht mehr wie die elektrische Maschine 1 gemäß Figuren 1 bis 3 als Synchronmaschine, sondern als Asynchronmaschine, wobei der Dämpferkäfig die Funktion eines Kurzschlusskäfigs übernimmt.

### Bezugszeichenliste

- (1): elektrische Maschine
- (2): Gehäuse
- (2a): Gehäusemantel
- (2b): Lagerschild
- (2c): Lagerschild
- (3a): Lager
- (3b): Lager
- (4): Stator
- (5): Rotor
- (6): Rotorwelle
- (7): Rotorscheibe
- (8): Permanentmagnetsegment
- (9): Ring
- (10): Ring
- (11): Stab
- (12): Blechpaketring
- (14): Spulenwicklung
- (15): Lüfterflügel

## Patentansprüche

1. Elektrische Maschine, betreibbar als Motor oder Generator, mit einem Rotor, umfassend eine Rotorscheibe, die an einer um eine Drehachse drehbare Rotorwelle befestigt ist, sowie mit einem Stator, wobei der Rotor und Stator einander gegenüberliegende Stirnseiten aufweisen, **dadurch gekennzeichnet, dass** die Stirnseiten jeweils in einem Neigungswinkel bezüglich der Drehachse der Rotorwelle (6) schräg gestellt sind, so dass ein zur Drehachse symmetrisches kegelförmiges Luftspaltfeld zwischen Rotor (5) und Stator (4) erhalten wird.

2. Elektrische Maschine nach Anspruch 1, **dadurch gekennzeichnet, dass** die Stirnseiten des Rotors (5) und Stators (4) im selben Neigungswinkel zur Drehachse geneigt sind.

3. Elektrische Maschine nach einem der Ansprüche 1 oder 2, **dadurch gekennzeichnet, dass** der Neigungswinkel α im Bereich 0 < α < 90° oder 90 < α < 180° liegt.

4. Elektrische Maschine nach einem der Ansprüche 1 bis 3, **dadurch gekennzeichnet, dass** der Neigungswinkel α so gewählt ist, dass in Richtung der Drehachse wirkende Anziehungskräfte zwischen Rotor (5) und Stator (4) erhalten werden, die ein Verspannung von Lagern (3a, 3b) zur Führung der Rotorwelle (6) bewirken.

5. Elektrische Maschine nach einem der Ansprüche 1 bis 4, **dadurch gekennzeichnet, dass** an der Rotorscheibe (7) Permanentmagnetsegmente (8) angeordnet sind, welche im Umfangsrichtung aufeinander folgend jeweils eine entgegen gesetzte Polarität aufweisen.

6. Elektrische Maschine nach Anspruch 5, **dadurch gekennzeichnet, dass** die Permanentmagnetsegmente (8) auf der dem Stator (4) zugewandten Stirnseite der Rotorscheibe (7) oder hinter der Stirnseite liegend angeordnet sind.

7. Elektrische Maschine nach einem der Ansprüche 1 bis 6, **dadurch gekennzeichnet, dass** auf der Rotorscheibe (7) ein Dämpferkäfig vorgesehen ist.

8. Elektrische Maschine nach Anspruch 7, **dadurch gekennzeichnet, dass** zur Ausbildung des Dämpferkäfigs zwei bezüglich der Drehachse der Rotorwelle (6) konzentrische metallische Ringe (9, 10) vorgesehen sind, zwischen welchen die Permanentmagnetsegmente (8) angeordnet sind, wobei die Ringe (9, 10) durch in radialer Richtung zwischen den einzelnen Permanentmagnetsegmenten (8) verlaufende metallische Stäbe (11) verbunden sind.

9. Elektrische Maschine nach Anspruch 7 oder 8, **dadurch gekennzeichnet, dass** der Dämpferkäfig die Funktion eines Kurzschlusskäfigs einer Asynchronmaschine übernimmt, wobei die Rotorscheibe (7) keine Permanentmagnetsegmente (8) aufweist und die elektrische Maschine (1) als Asynchronmaschine mit Kurzschlusskäfig arbeitet.

10. Elektrische Maschine nach einem der Ansprüche 1 bis 9, **dadurch gekennzeichnet, dass** der Stator (4) als Joch einen Blechpaketring (12) auf weist.

11. Elektrische Maschine nach Anspruch 10, **dadurch gekennzeichnet, dass** auf dem Blechpaketring (12) Spulenwicklungen (14) angebracht sind.

12. Elektrische Maschine nach Anspruch 11, **dadurch gekennzeichnet, dass** der Blechpaketring (12) Nuten zur Aufnahme der Spulenwicklungen (14) aufweist.

13. Elektrische Maschine nach einem der Ansprüche 10 bis 12, **dadurch gekennzeichnet, dass** der Blechpaketring (12) an der Innenseite eines Gehäuses (2) befestigt ist.

14. Elektrische Maschine nach einem der Ansprüche 1 bis 13, **dadurch gekennzeichnet, dass** diese eine Mehrfachanordnung von Rotoren (5) und zugeordneten Statoren (4) aufweist, wobei diese an der Rotorwelle (6) eine Reihenanordnung bilden.
